# EUROPÄISCHE PATENTANMELDUNG

(11) **EP 2 226 526 A2**
(43) Veröffentlichungstag der Anmeldung: **08.09.2010**
(21) Anmeldenummer: 10001742.5
(22) Anmeldetag: 20.02.2010
(51) Int. Cl.: F16F 9/46

(54) **Kolben-Zylindereinheit**

(30) Priorität: 03.03.2009 DE 102009011325; 18.01.2010 DE 102010004977
(71) Anmelder: Stabilus GmbH, 56070 Koblenz (DE)
(72) Erfinder: Ehre, Thomas, 56072 Koblenz (DE); Oster, Peter, 56814 Bremm (DE); Wilbert, Markus, 56745 Volkesfeld (DE)

(57) **Zusammenfassung**

Die Erfindung bezieht sich auf eine Kolben-Zylindereinheit mit einem geschlossenen und mit einem unter Druck stehenden Fluid gefüllten Zylinder 1, dessen Innenraum durch einen in dem Zylinder axial verschiebbaren Kolben 2 in eine erste und eine zweite Arbeitskammer 3, 4 unterteilt ist. Einseitig ist an dem Kolben 2 eine Kolbenstange 5 angeordnet, die durch die zweite Arbeitskammer 4 hindurch und an der einen Stirnseite des Zylinders 1 abgedichtet nach außen geführt ist, wobei ein von der ersten zur zweiten Arbeitskammer 3, 4 führender Durchlaß 19 durch Bestromung eines elektrisch ansteuerbaren Magnetventils öffenbar ist und der Durchlaß 19 und das Magnetventil im Kolben 2 ausgebildet sind sowie der Durchlaß 19 durch ein zwischen einer Schließstellung einer Öffnungsstellung bewegbar antreibbares Ventilschließglied verschließbar ist. Bei geschlossenem Ventildurchgang 19 kann durch äußere Kraftbeaufschlagung der Kolbenstange ein Druckgefälle zwischen der ersten und der zweiten Arbeitskammer hergestellt werden, durch das Ventile im Kolben öffnen und eine Kolbenstangenbewegurig in beide Bewegungsrichtungen ermöglicht wird.

## Beschreibung

Die Erfindung bezieht sich auf eine Kolben-Zylindereinheit mit einem geschlossenen und mit einem unter Druck stehenden Fluid gefüllten Zylinder, dessen Innenraum durch einen in dem Zylinder axial verschiebbaren Kolben in eine erste und eine zweite Arbeitskammer unterteilt ist, mit einer einseitig an dem Kolben angeordneten Kolbenstange, die durch die zweite Arbeitskammer hindurch und an der einen Stirnseite des Zylinders abgedichtet nach außen geführt ist, wobei ein von der ersten zur zweiten Arbeitskammer führender Durchlaß durch Bestromung eines elektrisch ansteuerbaren Magnetventils öffenbar ist und der Durchlaß und das Magnetventil im Kolben ausgebildet sind sowie der Durchlaß durch ein zwischen einer Schließstellung und einer Öffnungsstellung bewegbar antreibbares Ventilschließglied verschließbar ist.

Derartige Kolben-Zylindereinheiten werden insbesondere zum Öffnen von Klappen, insbesondere von Heckklappen an Kraftfahrzeugen benutzt, wobei der Zylinder an einem feststehenden Bauteil und das freie Ende der Kolbenstange an das freie Ende der Klappe des Kraftfahrzeugs angelenkt ist.

Aufgabe der Erfindung ist es eine Kolben-Zylindereinheit der eingangs genannten Art zu schaffen, die einen geringen Bauraum erfordert und aus wenigen, einfachen Bauteilen besteht sowie bei inaktivem Magnetventil eine manuelle Verstellung ermöglicht.

Diese Aufgabe wird erfindungsgemäß dadurch gelöst, daß bei unbestromtem Magnetventil und einem eine bestimmte Druckdifferenz überschreitenden Druckgefälle von der zweiten Arbeitskammer zur ersten Arbeitskammer ein erster Ventildurchgang eines ersten Ventils zwischen der ersten Arbeitskammer und der zweiten Arbeitskammer sowie bei unbestromtem Magnetventil und einem eine weitere bestimmte Druckdifferenz überschreitenden Druckgefälle von der ersten Arbeitskammer zur zweiten Arbeitskammer ein zweiter Ventildurchgang eines zweiten Ventils zwischen der ersten Arbeitskammer und der zweiten Arbeitskammer öffenbar ist.

Damit ist auch bei Ausfall einer Energieversorgung des Magnetventils eine manuelle Verstellung der Kolben-Zylindereinheit in beide Bewegungsrichtungen möglich.

Ein einfacher Aufbau wird dadurch erreicht, daß das zweite Ventil ein eine Strömung von der zweiten Arbeitskammer zur ersten Arbeitskammer sperrendes Rückschlagventil ist.

Weist dabei der Kolben an seiner zylindrischen Mantelfläche eine radial umlaufende Ringnut auf, in der ein Dichtring axial beweglich angeordnet ist, der mit seinem äußeren radial umlaufenden Umfang mit Vorspannung an der Innenwand des Zylinders in Anlage ist und an seinem inneren radial umlaufenden Umfang im Bereich des Nutgrundes unterströmbar ist, wobei die der ersten Arbeitskammer zugewandte Nutseitenwand geschlossen ist und die der zweiten Arbeitskammer zugewandte Nutseitenwand im Bereich des Nutgrundes eine zur zweiten Arbeitskammer führende Strömungsverbindung aufweist, so erfüllt der Dichtring eine Doppelfunktion aus, indem er in der einen Position als Ventilglied dient und in der anderen Position die abdichtende Trennung der beiden Arbeitskammern bewirkt.

Das zweite Ventil kann in einem anderen einfachen Aufbau aber auch von einer in eine Beaufschlagungsrichtung wirkenden und in die entgegengesetzte Beaufschlagungsrichtung nichtwirkenden Dichtung gebildet sein.

Zu einem kompakten Aufbau führt es, wenn das Magnetventil fest im Kolben angeordnete, strombeaufschlagbare erste Spule aufweist, in der ein Spulenkern axial zur Bewegungsrichtung eines Ankers angeordnet ist.

Der Spulenkern kann aus einem fest im Kolben angeordneten hülsenartigen äußeren Polkern und einem von dem äußeren Polkern umschlossenen zylinderartigen inneren Polkern bestehen, wobei der innere Polkern an seiner äußeren Mantelfläche mit einem Außengewinde versehen ist, mit dem der innere Polkern in ein an der inneren Mantelfläche des äußeren Polkerns ausgebildetes Innengewinde eingeschraubt ist.

Durch diese Ausbildung ist der Schaltspalt des Magnetventils unabhängig von Bauteiltoleranzen reproduzierbar einstellbar, indem der innere Polkern so weit in den äußeren Polkern eingeschraubt wird, bis der Anker mit einem bestimmten Drehmoment am Ventilsitz anliegt. Danach wird der innere Polkern um einen Winkel zurückgedreht, um den Schaltabstand einzustellen. Eine Fixierung des inneren Polkerns kann dann z.B. durch Kleben oder verpressen erfolgen.

Zu einer Verstärkung der Öffnungsbewegungskraft des Magnetventils führt es dabei, wenn der Anker von einer zweiten strombeaufschlagbaren Spule gebildet ist, wobei von der ersten Spule und der zweiten Spule einander anziehende Magnetfelder erzeugbar sind.

Dabei kann an dem dem Anker abgewandten Ende der ersten Spule ein das Magnetfeld der ersten Spule verstärkender Dauermagnet angeordnet sein.

Zur weiteren Krafterhöhung kann an dem der ersten Spule abgewandten Ende der zweiten Spule ein das Magnetfeld der zweiten Spule verstärkender zweiter Dauermagnet angeordnet sein.

Eine andere Ausbildung besteht darin, daß der Durchlaß in einem ankerseitigen, zylindrischen Bereich des Kolbens radial nach außen mündet, wobei der zylindrische Bereich von dem ringförmig ausgebildeten Schließglied umschlossen und zwischen einer die Mündung des Durchlasses abdeckenden Schließstellung und einer die Mündung freilassenden Öffnungsstellung axial bewegbar ist und wobei das Schließglied durch den federbelasteten Anker in Schließrichtung beaufschlagt ist.

Ist der Anker ringartig ausgebildet und auf dem zylindrisch ausgebildeten Spulenkern axial verschiebbar angeordnet, so wird dadurch ein kompakter Aufbau erreicht.

Zur Federbeaufschlagung des Ankers kann der Anker von einer am Spulenkern abgestützten Druckfeder in Schließrichtung des Ventilschließglieds beaufschlagt sein, wobei bei zweigeteiltem Spulenkern die Druckfeder an der ihr zugewandten ringartigen Stirnseite des äußeren Polkerns abgestützt sein kann.

Zur exakten Führung des Kolbens im Zylinder kann der Kolben ein oder mehrere Führungsringe aufweisen, mit denen der Kolben in dem Zylinder axial verschiebbar geführt ist, die vorzugsweise aus einem elektrisch isolierenden Werkstoff bestehen aber auch aus einem ferromagnetischen Werkstoff bestehen können oder einen von einem elektrisch isolierenden Mantel umschlossenen ferromagnetischen Kern aufweisen.

Ausführungsbeispiele der Erfindung sind in der Zeichnung dargestellt und werden im folgenden näher beschrieben. Es zeigen
- Figur 1: eine Kolben-Zylindereinheit im Längsschnitt
- Figur 2: einen vergrößerten Ausschnitt im Bereich des Kolbens der Kolben-Zylindereinheit nach Figur 1 im Längsschnitt
- Figur 3: einen vergrößerten Ausschnitt im Bereich des Kolbens eines zweiten Ausführungsbeispiels einer Kolben-Zylindereinheit im Längsschnitt
- Figur 4: einen vergrößerten Ausschnitt im Bereich des Kolbens eines dritten Ausführungsbeispiels einer Kolben-Zylindereinheit im Längsschnitt
- Figur 5: einen vergrößerten Ausschnitt im Bereich des Kolbens eines vierten Ausführungsbeispiels einer Kolben-Zylindereinheit im Längsschnitt
- Figur 6: einen vergrößerten Ausschnitt im Bereich des Kolbens eines fünften Ausführungsbeispiels einer Kolben-Zylindereinheit im Längsschnitt
- Figur 7: einen vergrößerten Ausschnitt im Bereich des Kolbens eines sechsten Ausführungsbeispiels einer Kolben-Zylindereinheit im Längsschnitt

- Figur 8: einen vergrößerten Ausschnitt im Bereich des Kolbens eines siebten Ausführungsbeispiels einer Kolben-Zylindereinheit im Längsschnitt
- Figur 9: einen vergrößerten Ausschnitt im Bereich des Kolbens eines achten Ausführungsbeispiels einer Kolben-Zylindereinheit im Längsschnitt
- Figur 10: einen vergrößerten Ausschnitt im Bereich des Kolbens eines neunten Ausführungsbeispiels einer Kolben-Zylindereinheit im Längsschnitt
- Figur 11: einen vergrößerten Ausschnitt im Bereich des Kolbens eines zehnten Ausführungsbeispiels einer Kolben-Zylindereinheit im Längsschnitt
- Figur 12: einen vergrößerten Ausschnitt im Bereich des Kolbens eines elften Ausführungsbeispiels einer Kolben-Zylindereinheit im Längsschnitt
- Figur 13: einen vergrößerten Ausschnitt im Bereich des Kolbens eines elften Ausführungsbeispiels einer Kolben-Zylindereinheit im Längsschnitt

Die in den Figuren dargestellten Kolben-Zylindereinheiten weisen einen mit einem unter Druck stehenden Fluid insbesondere mit Gas gefülltem Zylinder 1 auf, der ein Magnetfeldführungsrohr bildet und dessen Innenraum durch einen in dem Zylinder 1 axial verschiebbaren Kolben 2 in eine erste Arbeitskammer 3 und eine zweite Arbeitskammer 4 unterteilt ist.

Einseitig ist an dem Kolben 2 eine Kolbenstange 5 befestigt, die durch die zweite Arbeitskammer 4 hindurch und an der einen Stirnseite des Zylinders 1 durch ein Dichtungs- und Führungspaket 6 abgedichtet nach außen geführt ist.

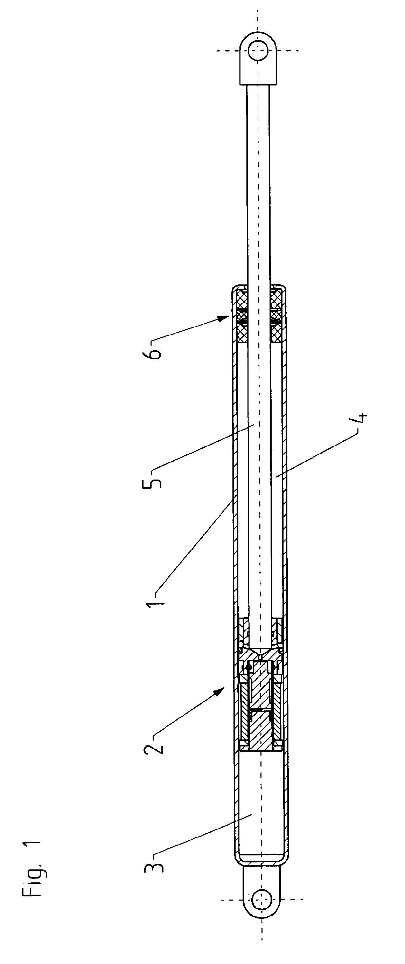

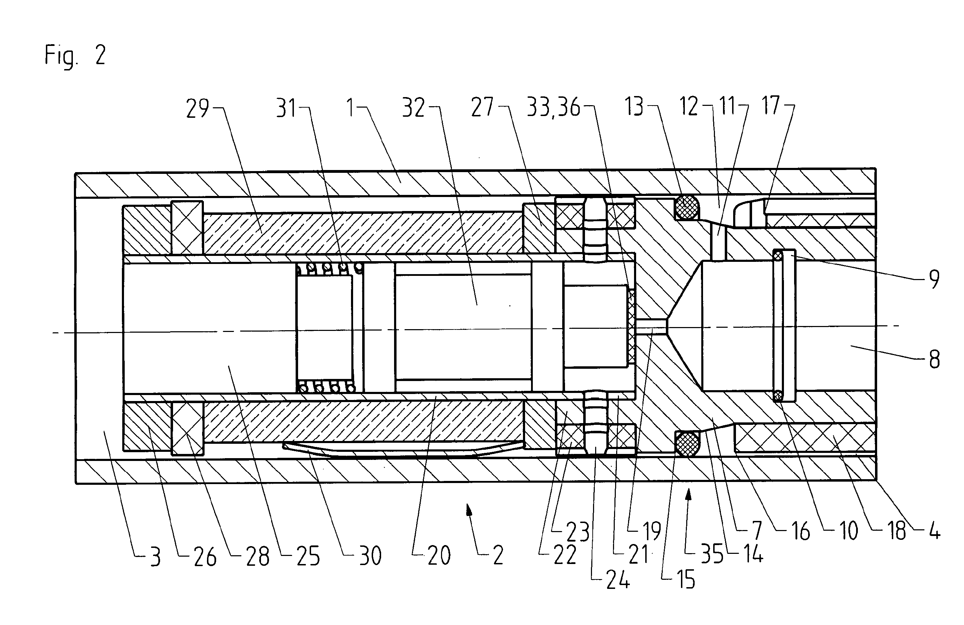

Bei dem Ausführungsbeispiel der Figuren 1 und 2 weist der Kolben 2 an seinem der zweiten Arbeitskammer 4 zugewandten Ende ein rotationssymmetrisches Halteteil 7 mit einer zur zweiten Arbeitskammer 4 hin offenen Grundbohrung 8 auf, in die das in den Zylinder 1 ragende Ende der Kolbenstange 5 hineinragt und befestigt ist. Eine radial umlaufende Nut 9 ist in der Wand der Grundbohrung 8 ausgebildet, in der ein Dichtungsring 10 eingesetzt ist, der die Kolbenstange 5 dicht umschließt. Von dem kegelig ausgebildeten Bodenbereich der Grundbohrung 8 geht eine Verbindungsbohrung 11 aus, die in eine radial umlaufende Ringnut 12 mündet, die an der zylindrischen Mantelfläche des Halteteils 7 ausgebildet ist. In der Ringnut 12 ist ein Dichtring 13 axial beweglich angeordnet, der mit seinem äußeren radial umlaufenden Umfang mit Vorspannung an der Innenwand des Zylinders 1 in Anlage ist und an seinem inneren radial umlaufenden Umfang im Bereich des Nutgrundes 14 der Ringnut 12 unterströmbar ist.

Dabei ist die der ersten Arbeitskammer 3 zugewandte Nutseitenwand 15 geschlossen und die der zweiten Arbeitskammer 4 zugewandte Nutseitenwand 16 weist im Bereich des Nutgrundes 14 eine zur zweiten Arbeitskammer 4 führende Strömungsverbindung 17 auf. Die zweite Nutseitenwand 16 ist durch eine Stirnwand einer auf dem der zweiten Arbeitskammer 4 zugewandten Endbereich des Halteteils 7 fest angeordneten Hülse 18 gebildet, die wie das Halteteil 7 vorzugsweise aus einem paramagnetischen Werkstoff besteht.

Durch die Ringnut 12 und den Dichtring 13 ist ein zweites Ventil 35 gebildet, das bei einem höheren Druck in der ersten Arbeitskammer 3 entgegen dem Druck in der zweiten Arbeitskammer 4 öffnet und die beiden Arbeitskammern 3 und 4 miteinander verbindet.

Zentrisch ist in dem Halteteil 7 ein Ventildurchgang 19 ausgebildet, der die Grundbohrung 8 mit der der ersten Arbeitskammer 3 zugewandten Seite des Halteteils 7 verbindet. An der der ersten Arbeitskammer 3 zugewandten Seite des Halteteils 7 ist ein konzentrisch im Zylinder 1 zur ersten Arbeitskammer 3 ragendes Rohr 20 befestigt. In dem Befestigungsbereich des Rohres 20 an dem Halteteil 7 sind in dem Rohrende 21 und dem das Rohrende 21 umschließenden Halteteilende 22 sowie einem das Halteteilende umschließenden Kolbenring 23 radial nach außen führende Kanäle 24 ausgebildet, so daß der zur ersten Arbeitskammer 3 gerichtete Mündungsbereich des Ventildurchgangs 19 mit der ersten Arbeitskammer 3 verbunden ist.

In dem zur ersten Arbeitskammer 3 gerichteten Endbereich des Rohres 20 ist ein Spulenkern 25 fest angeordnet, der wie das Rohr 20 aus einem ferromagnetischen Werkstoff besteht.

Auf dem der ersten Arbeitskammer 3 zugewandten Ende des Rohres 20 ist eine erste ringförmige Stahlscheibe 26 und auf dem der zweiten Arbeitskammer 4 zugewandten Endbereich des Rohres 20 eine zweite ringförmige Stahlscheibe 27 angeordnet.

Weiterhin ist zur zweiten Arbeitskammer 4 hin neben der ersten Stahlscheibe 26 noch ein Führungsring 28 aus einem ferromagnetischen Werkstoff angeordnet, mit dem der Kolben 2 im Zylinder 1 verschiebbar geführt ist.

Zwischen dem Führungsring 28 und der zweiten Stahlscheibe 27 ist das Rohr 20 von einer Spule 29 umschlossen, die über einen Schleifkontakt 30 mit der Innenwand des Zylinders 1 leitend verbunden ist, wobei der Zylinder 1 eine Energiezuführleitung bildet.

An dem Spulenkern 25 ist eine in dem Rohr 20 angeordnete vorgespannte Schraubendruckfeder 31 mit ihrem einen Ende abgestützt, die mit ihrem anderen Ende einen als rotationssymmetrisches Bauteil ausgebildeten, im Rohr 20 verschiebbar geführten Anker 32 gegen das Halteteil 7 beaufschlagt.

An der der Mündung des Ventildurchgangs 19 zugewandten Stirnseite weist der Anker 32 eine Dichtung 33 auf, die ein Ventilschließglied 36 bildet und durch die der Ventildurchgang 19 verschließbar ist.

Bei unbestromter Spule 29 wird durch die Schraubendruckfeder 31 der Anker 32 gegen das Ventilschließglied 36 beaufschlagt, das damit den Ventildurchgang 19 schließend auf dessen Mündung gedrückt wird.

Durch die größere Wirkfläche des Kolbens 2 auf seiner der ersten Arbeitskammer 3 zugewandten Seite gegenüber der der zweiten Arbeitskammer 4 zugewandten Seite erfolgt eine kurze Ausfahrbewegung und dadurch ein Schließen des zweiten Ventils 35.

Damit ist der Kolben 2 in dieser Position blockiert.

Wird durch äußere Belastung ein bestimmtes Druckgefälle zwischen den beiden Arbeitskammern 3 und 4 überschritten, so wird eine Verbindung zwischen den beiden Arbeitskammern 3 und 4 geöffnet.

Ist dabei der Druck in der zweiten Arbeitskammer 4 um einen bestimmten Betrag geringer als in der ersten Arbeitskammer 3, öffnet das zweite Ventil 35 durch Bewegen des Dichtrings 13 von einer Anlage an der ersten Nutseitenwand 15 zur zweiten Nutseitenwand 16.

Ist der Druck in der zweiten Arbeitskammer 4 um einen bestimmten Betrag höher als der Druck in der ersten Arbeitskammer 3, wird das Ventilschließglied 36 von der Mündung des Ventildurchgangs 19 abgehoben und der Ventildurchgang 19 geöffnet.

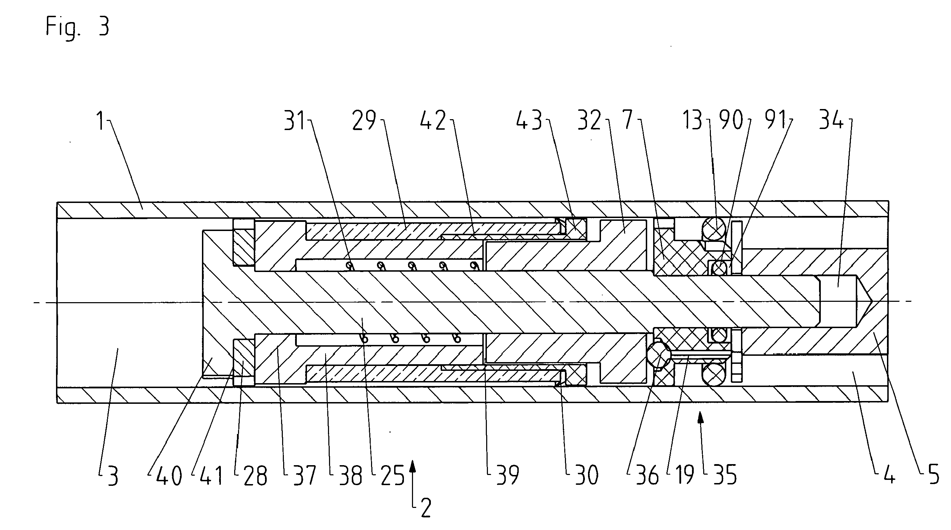

Bei dem Ausführungsbeispiel der Figur 3 ist das in den Zylinder 1 ragende Ende der Kolbenstange 5 mit einer koaxialen Bohrung 34 versehen, in die der Spulenkern 25 mit seinem einen Ende fest eingesetzt ist, so daß der bolzenartig ausgebildete Spulenkern 25 eine axiale Verlängerung der Kolbenstange 5 bildet.

Auf einer Stufe des Spulenkerns 25 ist ein ringartiges Halteteil 7 angeordnet, das mittels eines Dichtrings 90 gegenüber dem Spulenkern 25 abgedichtet ist, der in eine radial umlaufende Nut 91 an der Innenwand der Durchgangsbohrung des Halteteils 7 eingesetzt ist.

An der zylindrischen Mantelfläche des Halteteils 7 ist ein zweites Ventil 35 ausgebildet, das dem zweiten Ventil 35 in Figur 2 entspricht.

In dem Halteteil 7 ist axial durchgehend ein Ventildurchgang 19 ausgebildet, der an seinem der ersten Arbeitskammer 3 zugewandten Ende in einen annähernd konischen Ventilsitz mündet, der ein kugelförmiges Ventilschließglied 36 aufnimmt.

Auf dem Spulenkern 25 ist ein ringförmiger Anker 32 verschiebbar geführt, durch den das Ventilschließglied 36 gegen seinen Ventilsitz beaufschlagbar ist.

Der Anker 32 ist wiederum von dem einen Ende einer den Spulenkern 25 mit Spiel umschließenden, vorgespannten Schraubendruckfeder 31 gegen das Ventilschließglied 36 kraftbeaufschlagt.

Das andere Ende der Schraubendruckfeder 31 ist an einem Flansch 37 eines hülsenartigen Spulenträgers 38 abgestützt, wobei der hülsenartige Teil des Spulenträgers 38 die Schraubendruckfeder 31 mit Spiel umschließt, mit dem einen Ende bis auf einen Spalt 39 axial zum Anker 32 ragt und an seinem der ersten Arbeitskammer 3 zugewandten Ende über den Flansch 37 am Spulenkern 25 befestigt ist.

Zwischen dem Flansch 37 und dem der ersten Arbeitskammer 3 zugewandten pilzkopfartigen Ende 40 des Spulenkern 25, das ein Sechskant sein kann, ist eine Nut 41 gebildet, in der ein Führungsring 28 zur axialen Führung des Kolbens 2 im Zylinder 1 angeordnet ist.

An dem Spulenträger 38 ist in Richtung zur zweiten Arbeitskammer 4 ragend und einen Teil des Ankers 32 umschließend eine Spulenhülse 42 aus einem isolierenden Werkstoff angeordnet, die an ihrem der zweiten Arbeitskammer 4 zugewandten Ende eine radial nach außen gerichtete flanschartige Erweiterung 43 besitzt.

Zwischen der flanschartigen Erweiterung 43 und dem Flansch 37 ist der Spulenträger 38 und die Spulenhülse 42 von einer Spule 29 umschlossen, die über einen Schleifkontakt 30 mit der Innenwand des Zylinders 1 leitend verbunden ist, wobei der Zylinder 1 eine Energiezuführleitung bildet.

Bei unbestromter Spule 29 wird durch die Schraubendruckfeder 31 der Anker 32 gegen das Ventilschließglied 36 beaufschlagt, das damit den Ventildurchgang 19 schließend auf dessen Mündung gedrückt wird.

Durch die größere Wirkfläche des Kolbens 2 auf seine der ersten Arbeitskammer 3 zugewandten Seite gegenüber der der zweiten Arbeitskammer 4 zugewandten Seite erfolgt eine kurze Ausfahrbewegung und dadurch ein Schließen des zweiten Ventils 35.

Damit ist der Kolben 2 in dieser Position blockiert.

Wird durch äußere Belastung ein bestimmtes Druckgefälle zwischen den beiden Arbeitskammern 3 und 4 überschritten, so wird eine Verbindung zwischen den beiden Arbeitskammern 3 und 4 geöffnet.

Ist der Druck in der zweiten Arbeitskammer 4 um einen bestimmten Betrag geringer als in der ersten Arbeitskammer 3, öffnet das zweite Ventil 35 durch Bewegen des Dichtrings 13 von einer Anlage an der ersten Nutseitenwand 15 zur zweiten Nutseitenwand 16.

Ist der Druck in der zweiten Arbeitskammer 4 um einen bestimmten Betrag höher als der Druck in der ersten Arbeitskammer 3, wird das Ventilschließglied 36 von der Mündung des Ventildurchgangs 19 abgehoben und der Ventildurchgang 19 geöffnet.

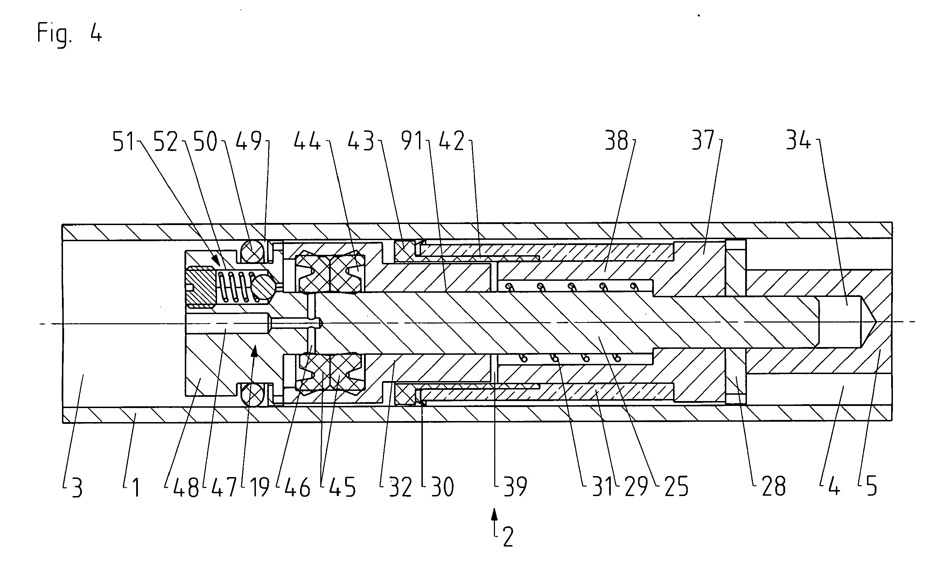

Bei dem Ausführungsbeispiel der Figur 4 ist ein bolzenartig ausgebildeter Spulenkern 25 auf die gleiche Art an der Kolbenstange 5 befestigt, wie in Figur 3.

Ein hülsenartiger Spulenträger 38 umschließt mit Spiel den Spulenkern 25 und weist an seinem der zweiten Arbeitskammer 4 zugewandten Ende einen Flansch 37 auf, mit dem er fest auf dem Spulenkern 25 angeordnet ist.

Axial zwischen dem in den Zylinder 1 ragenden Ende der Kolbenstange 5 und dem Flansch 37 ist ein Führungsring 28 angeordnet, mit dem der Kolben 2 im Zylinder 1 verschiebbar geführt ist.

An dem Spulenträger 38 ist in Richtung zur ersten Arbeitskammer 3 ragend eine Spulenhülse 42 aus einem isolierenden Werkstoff angeordnet, die an ihrem der ersten Arbeitskammer 3 zugewandten Ende eine radial nach außen ragende flanschartige Erweiterung 43 besitzt.

Zwischen der flanschartigen Erweiterung 43 und dem Flansch 37 ist der Spulenträger 38 und die Spulenhülse 42 von einer Spule 29 umschlossen, die über einen Schleifkontakt 30 mit der Innenwand des Zylinders 1 leitend verbunden ist, wobei der Zylinder eine Energiezuführleitung bildet.

Der Spulenkern 25 ist von einer Schraubendruckfeder 31 mit Spiel umschlossen, die wiederum mit Spiel von dem hülsenartigen Teil des Spulenträgers 38 umschlossen ist.

Die Schraubendruckfeder 31 stützt sich mit ihrem einen Ende an dem Flansch 37 ab und liegt mit ihrem anderen Ende mit Vorspannung an einer Stirnseite eines ringförmigen Ankers 32 an, der mit seiner Durchgangsbohrung 91 auf dem Spulenkern 25 um den Weg eines Spaltes 39 axial verschiebbar angeordnet ist.

An seinem der ersten Arbeitskammer 3 zugewandten Endbereich weist die Durchgangsbohrung 91 des Ankers 32 eine Erweiterungsstufe 44 auf.

In der Erweiterungsstufe 44 sind einander gegensinnig axial nebeneinander zwei den Spulenkern 25 mit Vorspannung umschließende, einfach wirkende Stangendichtungen 45 angeordnet.

In dem von den Stangendichtungen 45 überdeckten Bereich münden Radialbohrungen 46 an der Mantelfläche des Spulenkerns 25 nach außen, die zu einer Koaxialbohrung 47 im Spulenkern 25 führen, welche in die erste Arbeitskammer 3 mündet.

Die Koaxialbohrung 47 und die Radialbohrungen 46 bilden einen Ventildurchgang 19.

Der Spulenkern 25 besitzt an seinem der ersten Arbeitskammer 3 zugewandten Ende eine radiale Erweiterung 48, an deren radial umlaufender Mantelfläche eine umlaufende Nut 49 ausgebildet ist, in der ein O-Ring 50 angeordnet ist.

Der O-Ring 50 liegt mit Vorspannung an der Innenwand des Zylinders 1 und am Nutgrund der Nut 49 an und dichtet die beiden Arbeitskammern 3 und 4 gegeneinander ab.

In der radialen Erweiterung 48 ist weiterhin ein federbelastetes Rückschlagventil 51 in einer Verbindung 52 zwischen der ersten Arbeitskammer 3 und der zweiten Arbeitskammer 4 angeordnet, das eine Strömung von der zweiten Arbeitskammer 4 zu der ersten Arbeitskammer 3 sperrt.

Von der Schraubendruckfeder 31 wird bei unbestromter Spule 29 der Anker 32 in Anlage an der radialen Erweiterung 48 gehalten. In dieser Position sind die Radialbohrungen 46 von den Stangendichtungen 45 abgedeckt und der Ventildurchgang 19 geschlossen.

Ohne größere Belastung der Kolben-Zylindereinheit ist dabei auch das Rückschlagventil 51 geschlossen.

Damit ist der Kolben 2 in dieser Position blockiert.

Wird durch äußere Belastung ein bestimmtes Druckgefälle zwischen den beiden Arbeitskammern 3 und 4 überschritten, so wird eine Verbindung zwischen den beiden Arbeitskammern 3 und 4 geöffnet.

Ist der Druck in der zweiten Arbeitskammer 4 um einen bestimmten Betrag geringer als der Druck in der ersten Arbeitskammer 3, werden die beiden Stangendichtungen 45 von dem über den Ventildurchgang 19 auf sie einwirkenden Druck abgehoben und es kann Gas von der ersten Arbeitskammer 3 in die zweite Arbeitskammer 4 strömen.

Ist der Druck in der zweiten Arbeitskammer 4 um einen bestimmten Betrag höher als der Druck in der ersten Arbeitskammer 3, wird das Rückschlagventil 51 geöffnet und es kann Gas von der zweiten Arbeitskammer 4 in die erste Arbeitskammer 3 strömen.

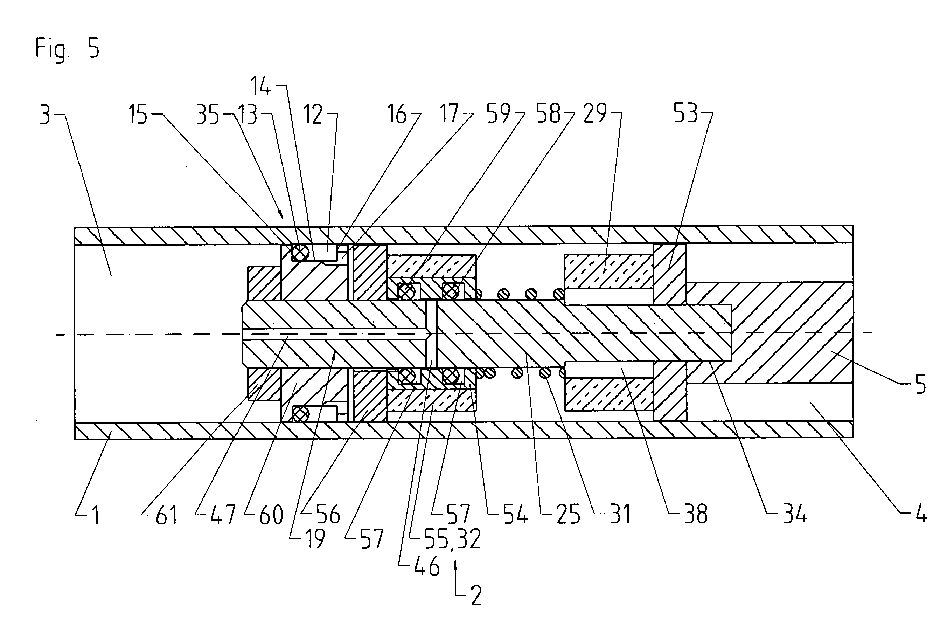

Bei dem Ausführungsbeispiel der Figur 5 entspricht die Befestigung eines bolzenartigen Spulenkerns 25 an der Kolbenstange 5 der Befestigung in Figur 4.

An die Kolbenstange 5 anschließend, ist auf dem Spulenkern 25 eine erste Dauermagnetscheibe 53 angeordnet, neben der auf der der zweiten Arbeitskammer 4 abgewandten Seite feststehend eine erste Spule 29 koaxial den Spulenkern 25 umschließend angeordnet ist.

An dem die Spule 29 tragenden Spulenträger 38 ist eine den Spulenkern 25 mit Spiel umschließende Schraubendruckfeder 31 mit ihrem einen Ende abgestützt.

Mit ihrem anderen Ende liegt die vorgespannte Schraubendruckfeder 31 an einem ringartigen, den Spulenkern 25 umschließenden und auf diesem axial verschiebbar angeordneten Spulenkörper 54 an, der von einer zweiten strombeaufschlagbaren Spule 55 umwickelt ist, die einen Anker 32 bildet.

Auf der der ersten Spule 29 abgewandten Seite des Spulenkörpers 54 ist koaxial eine zweite Dauermagnetscheibe 56 angeordnet, die auch als Anschlag für eine Schließstellung dient.

In dem Spulenkern 25 ist ein Ventildurchgang 19 ausgebildet, der aus einer in die erste Arbeitskammer 3 mündenden Koaxialbohrung 47 besteht, von der Radialbohrungen 46 zur Mantelfläche des Spulenkerns 25 führen und dort nach außen münden.

Die Mündungen der Radialbohrungen 46 sind in der dargestellten Schließstellung des Spulenkörpers 54 von diesem abgedeckt und somit verschlossen.

In dieser Schließstellung des Spulenkörpers 54 ist der Spulenkern 25 axial beidseitig von einem Dichtring umschlossen, wobei jeder Dichtring in einer radial umlaufenden Nut 57 im Spulenkörper 54 angeordnet ist.

Der der ersten Spule 29 nähere Dichtring ist ein doppeltwirkender Dichtring 58 und der der ersten Spule 29 entferntere Dichtring ist ein einfachwirkender Dichtring 59. Der einfachwirkende Dichtring 59 dichtet nur in Richtung von der zweiten Arbeitskammer 4 zur ersten Arbeitskammer 3 ab, während der doppeltwirkende Dichtring 58 in beide Strömungsrichtungen abdichtet.

Auf dem zur ersten Arbeitskammer 3 gerichteten freien Ende des Spulenkerns 25 ist ein rotationssymmetrischer Ventilkörper 60 aus einem paramagnetischen Material angeordnet und durch eine auf das mit einem Gewinde versehene Ende des Spulenkerns 25 aufgeschraubte Mutter 61 gesichert.

An der zylindrischen Mantelfläche besitzt der Ventilkörper 60 eine radial umlaufende Ringnut 12, in der ein Dichtring 13 axial beweglich angeordnet ist, der mit seinem äußeren radial umlaufenden Umfang mit Vorspannung an der Innenwand des Zylinders 1 in Anlage ist und an seinem inneren radial umlaufenden Umfang im Bereich des Nutgrundes 14 unterströmbar ist, wobei die der ersten Arbeitskammer 3 zugewandte Nutseitenwand 15 geschlossen und die der zweiten Arbeitskammer 4 zugewandte Nutseitenwand 16 im Bereich des Nutgrundes 14 eine zur zweiten Arbeitskammer 4 führende Strömungsverbindung 17 aufweist.

Ringnut 12 und Dichtring 13 bilden ein zweites Ventil 35.

Bei unbestromten Spulen 29 und 55 wird durch die Schraubendruckfeder 31 der Anker 32 gegen die zweite Dauermagnetscheibe 56 beaufschlagt, so daß damit der Ventildurchgang 19 durch den Spulenkörper 54 verschlossen ist.

Durch die größere Wirkfläche des Kolbens 2 auf seiner der ersten Arbeitskammer 3 zugewandten Seite gegenüber der der zweiten Arbeitskammer 4 zugewandten Seite erfolgt eine kurze Ausfahrbewegung und dadurch ein Schließen des zweiten Ventils 35.

Damit ist der Kolben 2 in dieser Position blockiert.

Wird durch äußere Belastung ein bestimmtes Druckgefälle zwischen den beiden Arbeitskammern 3 und 4 überschritten, so wird eine Verbindung zwischen den beiden Arbeitskammern 3 und 4 geöffnet.

Ist dabei der Druck in der zweiten Arbeitskammer 4 um einen bestimmten Betrag geringer als in der ersten Arbeitskammer 3, öffnet das zweite Ventil 35 durch Bewegen des Dichtrings 13 von einer Anlage an der ersten Nutseitenwand 15 zur zweiten Nutseitenwand 16.

Ist der Druck in der zweiten Arbeitskammer 4 um einen bestimmten Betrag höher als der Druck in der ersten Arbeitskammer 3, wird der einfachwirkende Dichtring 59 durch das Gas im Ventildurchgang 19 überdrückt und von dem Spulenkern 25 abgehoben, so daß der Ventildurchgang 19 geöffnet ist.

Werden die beiden Spulen 29 und 55 bestromt entsteht ein magnetisches Feld, dessen Feldlinien durch die ferromagnetischen Teile Spulenkern 25, Dauermagnetscheiben 53 und 56 sowie Zylinder 1 geschlossen ist. Zur Verstärkung dieses Feldes dienen die einander anziehenden Dauermagnetscheiben 53 und 56.

Durch diese Magnetfelder wird die als Anker 32 dienende zweite Spule 55 mit dem Spulenkörper 54 an die erste Spule 29 herangezogen und damit die Mündungen der Radialbohrungen 46 freigegeben, so daß das Gas von einer Arbeitskammer zur anderen Arbeitskammer strömen kann.

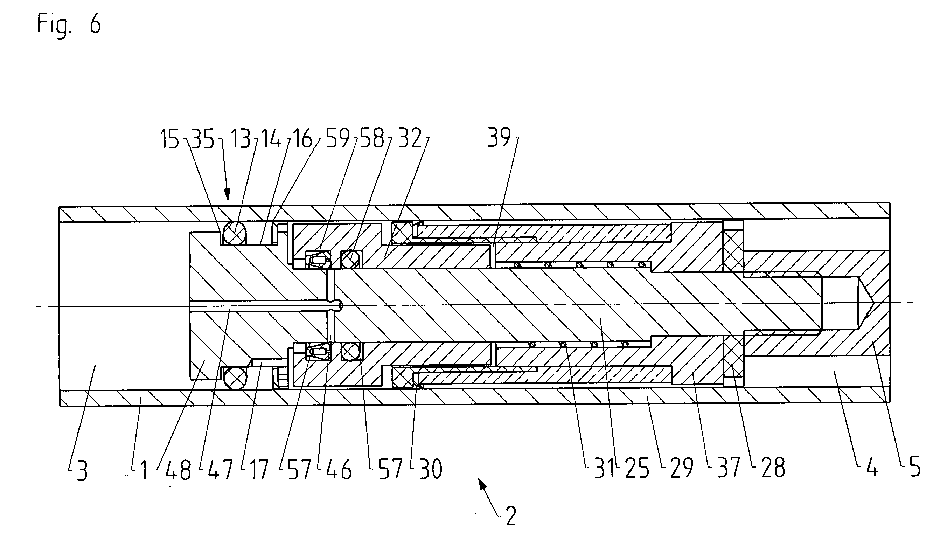

Das Ausführungsbeispiel der Figur 6 besitzt weitgehend den Aufbau des Ausführungsbeispiels der Figur 4.

Anstatt der Stangendichtungen 45 weist der Anker 32 aber entsprechend dem Ausführungsbeispiel der Figur 5 Nuten 57 auf, in denen Dichtringe 58 und 59 angeordnet sind.

Weiterhin weist der Spulenkern 25 an seinem der ersten Arbeitskammer 3 zugewandten Endbereich ein zweites Ventil 35 auf, das dem zweiten Ventil 35 in Figur 5 entspricht.

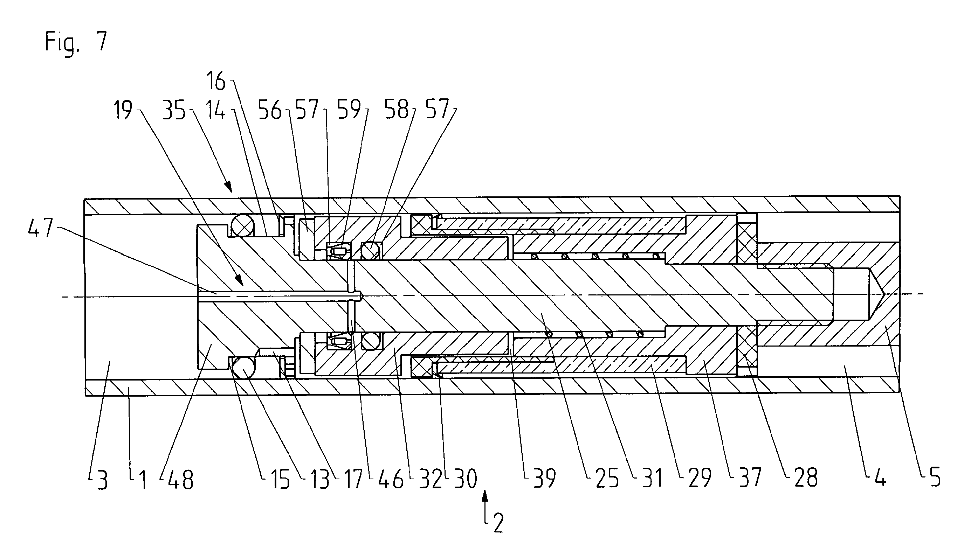

Das Ausführungsbeispiel der Figur 7 entspricht dem Ausführungsbeispiel der Figur 6.

Zusätzlich ist an der der ersten Arbeitskammer 3 zugewandten Stirnseite des Ankers 32 eine Dauermagnetscheibe 56 zur Verstärkung des von der Spule 29 erzeugten Magnetfeldes angeordnet.

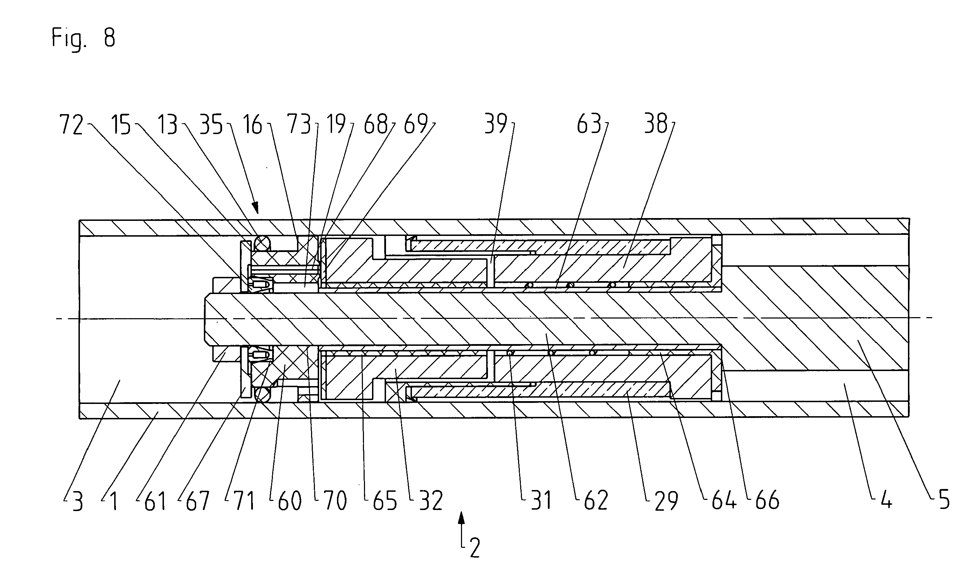

Das Ausführungsbeispiel der Figur 8 entspricht weitgehend dem Ausführungsbeispiel der Figur 6.

Ein Unterschied besteht darin, daß ein Fortsatz 62 geringeren Durchmessers der Kolbenstange 5 gebildet ist, der im Bereich von Spulenträger 38 und Anker 32 von einer Führungshülse 63 umschlossen ist, die aus einem paramagnetischen Werkstoff besteht, um einen magnetischen Kurzschluß der Feldlinien über die Kolbenstange 5 zu verhindern.

Am Spulenträger 38 wird dieser Kurzschluß zusätzlich durch eine Distanzbuchse 64 aus einem paramagnetischen Werkstoff verhindert, über die der Spulenträger 38 an einer Stufe 66 axial abgestützt ist, die an dem Übergang von dem Fortsatz 62 in die eigentliche Kolbenstange 5 gebildet ist.

Auch der Anker 32 ist über eine paramagnetische Führungsbuchse 65 axial verschiebbar auf der Führungshülse 63 angeordnet.

Die Führungshülse 63 bildet gleichzeitig eine Distanzhülse, die sich mit ihrem einen Ende an der Stufe 66 abstützt.

Mittels einer auf das mit einem Gewinde versehene, der ersten Arbeitskammer 3 zugewandte Ende des Fortsatzes 62 aufgeschraubte Mutter 61 wird über eine Scheibe 67 ein Ventilkörper 60 gegen das andere Ende der Führungshülse 63 verspannt.

An der äußeren Mantelfläche ist der Ventilkörper 60 mit einem zweiten Ventil 35 versehen, das dem zweiten Ventil 35 in Figur 7 entspricht.

Weiterhin ist axial zur Längsachse des Fortsatzes 62 ein Ventildurchgang 19 in dem Ventilkörper 60 ausgebildet, der die erste Arbeitskammer 3 mit der zweiten Arbeitskammer 4 verbindet und an seiner dem Anker 32 zugewandten Mündung als hervorstehender Ventilsitz 68 ausgebildet ist.

An der dem aus einem paramagnetischen Werkstoff bestehenden Ventilkörper 60 gegenüberliegenden Stirnseite des Ankers 32 ist eine scheibenartige Dichtung 69 angeordnet, die im unbestromten Zustand der Spule 29 von der Schraubendruckfeder 31 über den Anker 32 auf den Ventilsitz 68 gedrückt wird und den Ventildurchgang 19 schließt.

An dem Ende der den Fortsatz 62 aufnehmenden Durchgangsbohrung 70 des Ventilkörpers 60 ist eine Ringnut 71 ausgebildet, die einen einfach wirkenden Dichtring 72 aufnimmt.

Durch die größere Wirkfläche des Kolbens 2 auf seiner der ersten Arbeitskammer 3 zugewandten Seite gegenüber der der zweiten Arbeitskammer 4 zugewandten Seite erfolgt eine kurze Ausfahrbewegung und dadurch ein Schließen des zweiten Ventils 35.

Damit ist der Kolben 2 in dieser Position blockiert.

Wird durch äußere Belastung ein bestimmtes Druckgefälle zwischen den beiden Arbeitskammern 3 und 4 überschritten, so wird eine Verbindung zwischen den beiden Arbeitskammern 3 und 4 geöffnet.

Ist dabei der Druck in der zweiten Arbeitskammer 4 um einen bestimmten Betrag geringer als der Druck in der ersten Arbeitskammer 3, öffnet das zweite Ventil 35 durch Bewegen des Dichtrings 13 von einer Anlage an der ersten Nutseitenwand 15 zur zweiten Nutseitenwand 16.

Ist der Druck in der zweiten Arbeitskammer 4 um einen bestimmten Betrag höher als der Druck in der ersten Arbeitskammer 3, wird der einfachwirkende Dichtring 72 überdrückt und Gas kann von der ersten Arbeitskammer 3 an dem Dichtring 72 vorbei durch einen Kanal 73 im Ventilkörper 60 zur zweiten Arbeitskammer 4 strömen.
In entgegengesetzter Richtung verhindert der Dichtring 72 eine Strömung.

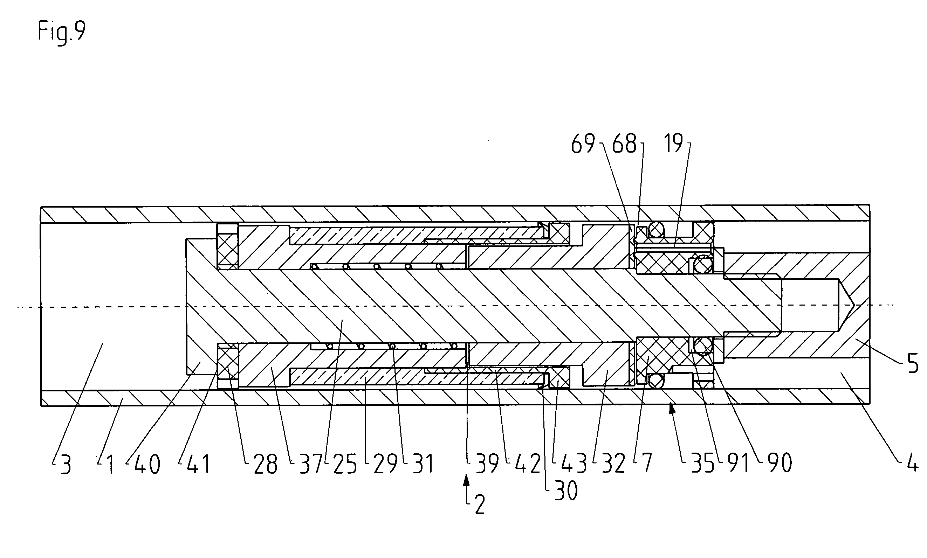

Das Ausführungsbeispiel der Figur 9 entspricht dem Ausführungsbeispiel der Figur 3 mit dem Unterschied, daß anstatt eines kugelförmigen Ventilschließgliedes 36 entsprechend Figur 8 eine scheibenartige Dichtung 69 vorhanden ist, die auf den Ventilsitz 68 an der Mündung des Ventildurchgangs 19 im Halteteil 7 aus einem paramagnetischen Werkstoff aufsetzbar ist.

Ist bei unbestromter Spule 29 der Druck in der zweiten Arbeitskammer 4 durch äußere Belastung um einen bestimmten Betrag größer als der Druck in der ersten Arbeitskammer 3, so wird von dem Druck in der zweiten Arbeitskammer 4 die scheibenartige Dichtung 69 von dem Ventilsitz 68 abgehoben und der Ventildurchgang 19 geöffnet.

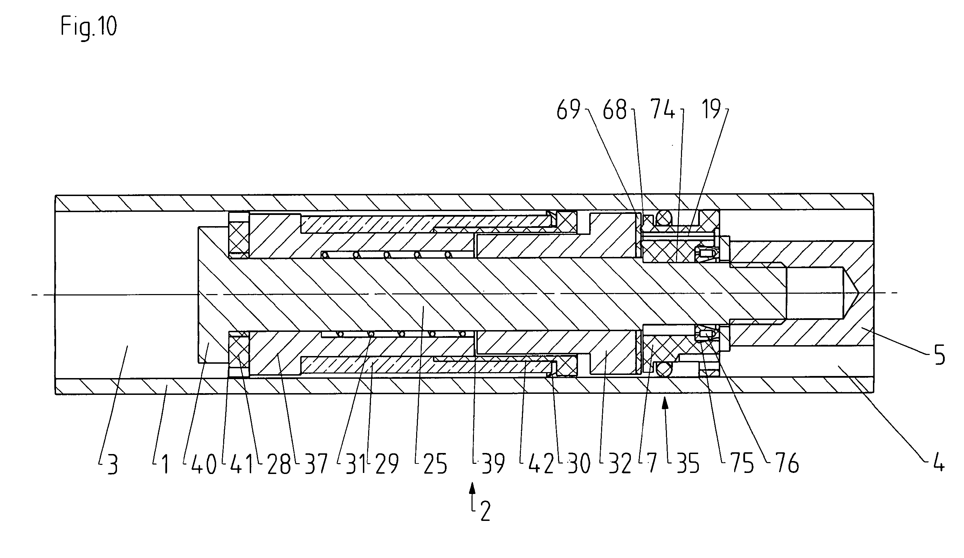

Das Ausführungsbeispiel der Figur 10 entspricht dem Ausführungsbeispiel der Figur 9.

Zusätzlich ist an dem der zweiten Arbeitskammer 4 zugewandten Ende der den Spulenkern 25 aufnehmenden Durchgangsbohrung 74 des Halteteils 7 eine Ringnut 75 ausgebildet, in der ein einfach wirkender Dichtring 76 angeordnet ist.

Ist bei unbestromter Spule 29 der Druck in der ersten Arbeitskammer 4 durch eine äußere Belastung um einen bestimmten Betrag größer als der Druck in der zweiten Arbeitskammer 3, so wird von dem Gas der Dichtring 76 umströmt und es gelangt Gas aus der ersten Arbeitskammer 4 über die Durchgangsbohrung 74 zur zweiten Arbeitskammer 3.

In entgegengesetzter Strömungsrichtung sperrt der Dichtring 76.

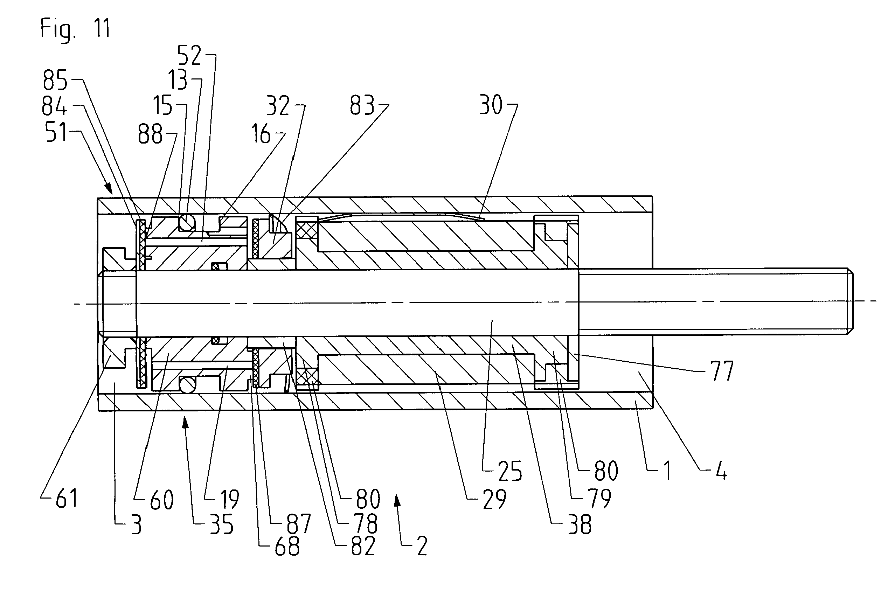

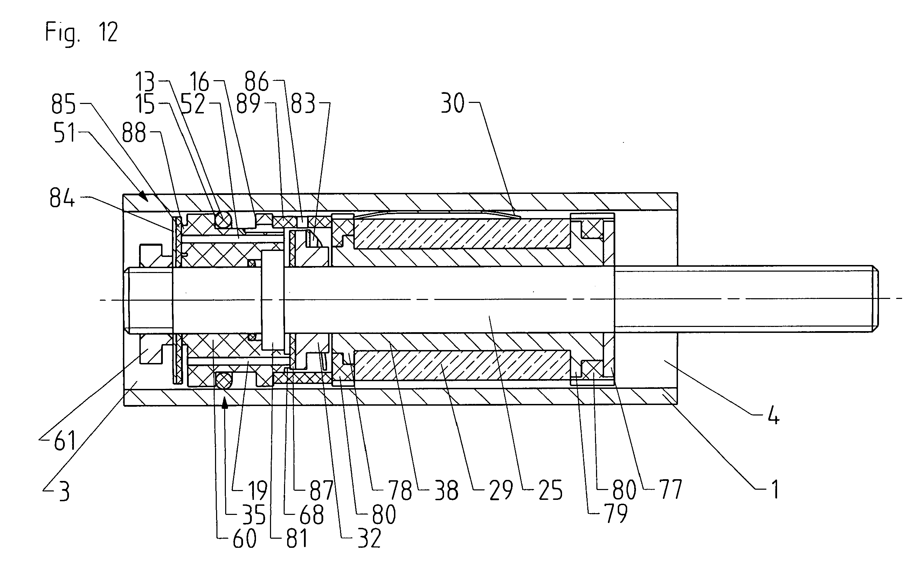

Bei den Ausführungsbeispielen der Figuren 11 und 12 weist ein bolzenartiger Spulenkern 25 aus einem paramagnetischen Material an seinen beiden Enden jeweils ein Gewinde auf, wobei er mit dem kolbenstangenseitigen Gewinde in eine koaxiale Gewindebohrung der Kolbenstange einschraubbar ist.

An dem der Kolbenstange abgewandten Ende des kolbenstangenseitigen Gewindes ist eine erste Scheibe 77 aus einem ferromagnetischen Material auf dem Spulenkern 25 angeordnet, an der sich ein hülsenartiger Spulenträger 38 aus einem ferromagnetischen Material mit seinem einen Ende axial abstützt.

Der Spulenträger 38 besitzt an seinen beiden axialen Enden radiale, sich nach außen erstreckende Flansche 78 und 79, die jeweils von Ringen 80 aus einem paramagnetischen Material umschlossen sind.

Zwischen den Flanschen 78 und 79 ist der Spulenträger 38 von einer Spule 29 umwickelt, die über einen Schleifkontakt 30 mit der Innenwand des Zylinders 1 leitend verbunden ist, wobei der Zylinder 1 eine Energiezuführleitung bildet.

Über einen Distanzring 82 ist in Figur 11 ein aus einem paramagnetischen Material bestehender, als rotationssymmetrisches Bauteil auf dem Spulenkern 25 abgedichtet angeordneter Ventilkörper 60 axial an dem Spulenträger 38 abgestützt, der von einer auf das der ersten Arbeitskammer 3 zugewandte Gewinde des Spulenkerns 25 aufgeschraubten Mutter 61 gegen den Spulenträger 38 verspannt ist.

In Figur 12 besitzt der Spulenkern 25 einen radial hervorstehenden, umlaufenden Ringansatz 81, gegen der dem Ventilkörper 60 in Figur 11 entsprechende, aber aus einem paramagnetischen Werkstoff bestehende Ventilkörper 60 durch die Mutter 61 axial verspannt ist.

Von der Mutter 61 wird dabei auch eine ein Rückschlagventil 51 bildende, auf dem Spulenkern 25 angeordnete erste Federscheibe 84 mit einem darauf als Schließglied angeordneten Elastomerbelag 85 gegen einen axial hervorstehenden Ventilsitz 88 an der Mündung einer Verbindung 52 zwischen der ersten Arbeitskammer 3 und zweiten Arbeitskammer 4 beaufschlagt.

Durch dieses Rückschlagventil 51 ist eine Strömung von der ersten Arbeitskammer 3 zur zweiten Arbeitskammer 4 gesperrt.

Zwischen dem Spulenträger 38 und dem Ventilkörper 60 ist ein ringförmiger Anker 32 auf dem Spulenkern 25 bzw. dem den Spulenkern 25 umschließenden Distanzring 82 axial verschiebbar angeordnet, der durch eine an dem Spulenträger 38 abgestützte Wellenfeder 83 mit Vorspannung den Anker 32 axial beaufschlagt und diesen mit einem darauf angeordneten Elastomerbelag 87 gegen einen axial hervorstehenden Ventilsitz 68 an der Mündung eines Ventildurchgangs 19 drückt.

Der Ventildurchgang 19 verbindet die erste Arbeitskammer 3 mit der zweiten Arbeitskammer 4.

In Figur 12 ist der Bereich des Ankers von einer Hülse 89 aus einem paramagnetischen Werkstoff umschlossen, in der eine radiale Durchgangsbohrung 86 ausgebildet ist.

An der zylindrischen Mantelfläche des Ventilkörpers 60 ist ein zweites Ventil 35 ausgebildet, das dem zweiten Ventil 35 in Figur 5 entspricht.

Wird die Spule 29 bestromt, entsteht ein magnetisches Feld, dessen Feldlinien durch die ferromagnetischen Teile sowie den Zylinder 1 geschlossen ist.

Dabei sind die ferromagnetischen Teile der Spulenträger 38, der Anker 32, die Scheibe 77 sowie der Zylinder 1.

Durch dieses Magnetfeld wird der Anker 32 entgegen der Kraft der Wellenfeder 83 bei Bestromung der Spule 29 an die Spule 29 herangezogen und damit der Ventildurchgang 19 geöffnet, so daß Gas von einer Arbeitskammer zur anderen strömen kann.

Bei unbestromter Spule 29 wird durch die Wellenfeder 83 der Anker 32 mit seinem Elastomerbelag 87 gegen den Ventilsitz 68 beaufschlagt und damit der Ventildurchgang 19 geschlossen.

Durch die größere Wirkfläche des Kolbens 2 auf seiner der ersten Arbeitskammer 3 zugewandten Seite gegenüber der der zweiten Arbeitskammer 4 zugewandten Seite erfolgt eine kurze Ausfahrbewegung und dadurch ein Schließen des zweiten Ventils 35.

Damit ist der Kolben in dieser Position blockiert.

Wird durch äußere Belastung ein bestimmtes Druckgefälle zwischen den beiden Arbeitskammern 3 und 4 überschritten, so wird eine Verbindung zwischen den beiden Arbeitskammern 3 und 4 geöffnet.

Ist dabei der Druck in der zweiten Arbeitskammer 4 um einen bestimmten Betrag geringer als in der ersten Arbeitskammer 3, öffnet das zweite Ventil 35 durch Bewegen des Dichtrings 13 von einer Anlage an der ersten Nutseitenwand 15 zur zweiten Nutseitenwand 16.

Ist der Druck in der zweiten Arbeitskammer 4 durch äußere Belastung um einen bestimmten Betrag höher als der Druck in der ersten Arbeitskammer 3, wird der Elastomerbelag 85 der ersten Federscheibe 84 von dem Ventilsitz 88 abgehoben und die Verbindung 52 geöffnet.

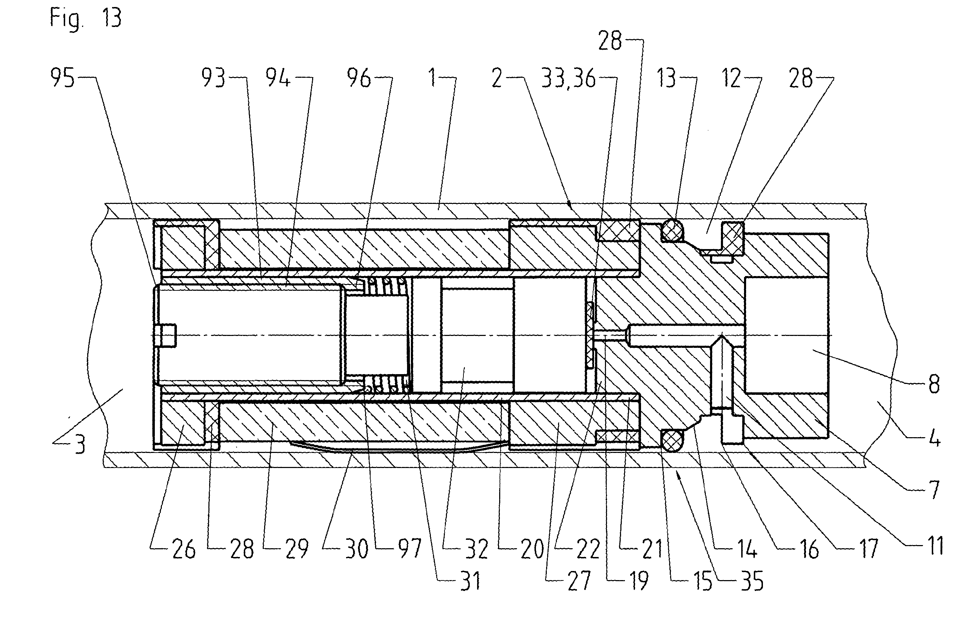

Das Ausführungsbeispiel der Figur 13 besitzt weitgehend den Aufbau des Ausführungsbeispiels der Figur 2.

Im Unterschied zur Figur 2 ist in Figur 13 der Spulenkern 25 zweiteilig ausgebildet und besteht zum einen aus einem in das Rohr 20 eingepreßten hülsenartigen äußeren Polkern 93, der an seiner inneren Mantelfläche mit einem Innengewinde 96 versehen ist. Weiterhin besteht der Spulenkern aus einem zylinderartigen inneren Polkern 94, der mit seinem an seiner äußeren Mantelfläche ausgebildeten Außengewinde 95 in das Innengewinde 96 des äußeren Polkerns 93 so eingeschraubt und fixiert ist, daß der Schaltabstand zum Anker 32 exakt eingestellt ist.

Die Schraubendruckfeder 31 ist dabei an der ringartigen Stirnfläche 97 des äußeren Polkerns 93 abgestützt.

Der Kolben 2 ist durch drei Führungsringe 28 aus einem elektrisch isolierenden Material im Zylinder 1 verschiebbar geführt. Um die Magnetkraft zu verstärken, können die Führungsringe 28 auch einen ferromagnetischen Innenring aufweisen, der von dem elektrisch isolierenden Material zur Verhinderung eines Kurzschlusses umgeben ist.

Die Polkerne 93 und 94, der Anker 32, die Stahlhülsen oder Stahlscheiben 26 und 27 und der Zylinder 1 bestehen aus einem ferromagnetischen Material. Das Rohr 20 besteht vorzugsweise aus einem ferromagnetischen Material, Es kann aber auch aus einem paramagnetischen Material gefertigt sein.

Die Energieversorgung der Spule 29 mit einer Gleichspannung von z.B. 12 V erfolgt um einen über den Zylinder 1 und den Schleifkontakt 30 und zum anderen über die Kolbenstange, das aus einem paramagnetischen Material bestehende Halteteil 7 und das Rohr 20.

Dabei kann die Geschwindigkeit durch ein pulsweitenmoduliertes Signal gesteuert werden.

### Bezugszeichenliste

- 1: Zylinder
- 2: Kolben
- 3: erste Arbeitskammer
- 4: zweite Arbeitskammer
- 5: Kolbenstange
- 6: Dichtungs- und Führungspaket
- 7: Halteteil
- 8: Grundbohrung
- 9: Nut
- 10: Dichtungsring
- 11: Verbindungsbohrung
- 12: Ringnut
- 13: Dichtring
- 14: Nutgrund
- 15: Nutseitenwand
- 16: Nutseitenwand
- 17: Strömungsverbindung
- 18: Hülse
- 19: Ventildurchgang
- 20: Rohr
- 21: Rohrende
- 22: Halteteilende
- 23: Kolbenring
- 24: Kanäle
- 25: Spulenkern
- 26: erste Stahlscheibe
- 27: zweite Stahlscheibe
- 28: Führungsring
- 29: Spule
- 30: Schleifkontakt

- 31: Schraubendruckfeder
- 32: Anker
- 33: Dichtung
- 34: Bohrung
- 35: zweites Ventil
- 36: Ventilschließglied
- 37: Flansch
- 38: Spulenträger
- 39: Spalt
- 40: Ende
- 41: Nut
- 42: Spulenhülse
- 43: Erweiterung
- 44: Erweiterungsstufe
- 45: Stangendichtungen
- 46: Radialbohrungen
- 47: Koaxialbohrung
- 48: radiale Erweiterung
- 49: Nut
- 50: O-Ring
- 51: Rückschlagventil
- 52: Verbindung
- 53: erste Dauermagnetscheibe
- 54: Spulenkörper
- 55: zweite Spule
- 56: zweite Dauermagnetscheibe
- 57: Nut
- 58: Dichtring
- 59: Dichtring
- 60: Ventilkörper

- 61: Mutter
- 62: Fortsatz
- 63: Führungshülse
- 64: Distanzbuchse
- 65: Führungsbuchse
- 66: Stufe
- 67: Scheibe
- 68: Ventilsitz
- 69: Dichtung
- 70: Durchgangsbohrung
- 71: Ringnut
- 72: Dichtring
- 73: Kanal
- 74: Durchgangsbohrung
- 75: Ringnut
- 76: Dichtring
- 77: Scheibe
- 78: Flansch
- 79: Flansch
- 80: Ring
- 81: Ringansatz
- 82: Distanzring
- 83: Wellenfeder
- 84: erste Federscheibe
- 85: Elastomerbelag
- 86: Durchgangsbohrung
- 87: Elastomerbelag
- 88: Ventilsitz
- 89: Hülse
- 90: Dichtring
- 91: Nut
- 92: Durchgangsbohrung
- 93: äußerer Polkern
- 94: innerer Polkern

- 95: Außengewinde
- 96: Innengewinde
- 97: Stirnseite

## Patentansprüche

1. Kolben-Zylindereinheit mit einem geschlossenen und mit einem unter Druck stehenden Fluid gefüllten Zylinder, dessen Innenraum durch einen in dem Zylinder axial verschiebbaren Kolben in eine erste und eine zweite Arbeitskammer unterteilt ist, mit einer einseitig an dem Kolben angeordneten Kolbenstange, die durch die zweite Arbeitskammer hindurch und an der einen Stirnseite des Zylinders abgedichtet nach außen geführt ist, wobei ein von der ersten zur zweiten Arbeitskammer führender Durchlaß durch Bestromung eines elektrisch ansteuerbaren Magnetventils öffenbar ist und der Durchlaß und das Magnetventil im Kolben ausgebildet sind sowie der Durchlaß durch ein zwischen einer Schließstellung und einer Öffnungsstellung bewegbar antreibbares Ventilschließglied verschließbar ist, **dadurch gekennzeichnet, daß** bei unbestromtem Magnetventil und einem eine bestimmte Druckdifferenz überschreitenden Druckgefälle von der zweiten Arbeitskammer (4) zur ersten Arbeitskammer (3) ein erster Ventildurchgang eines ersten Ventils zwischen der ersten Arbeitskammer (3) und der zweiten Arbeitskammer (4) sowie bei unbestromtem Magnetventil und einem eine weitere bestimmte Druckdifferenz überschreitenden Druckgefälle von der ersten Arbeitskammer (3) zur zweiten Arbeitskammer (4) ein zweiter Ventildurchgang eines zweiten Ventils (35) zwischen der ersten Arbeitskammer (3) und der zweiten Arbeitskammer (4) öffenbar ist.

2. Kolben-Zylindereinheit nach Anspruch 1, **dadurch gekennzeichnet, daß** das zweite Ventil (35) ein eine Strömung von der zweiten Arbeitskammer (4) zur ersten Arbeitskammer (3) sperrendes Rückschlagventil ist.

3. Kolben-Zylindereinheit nach Anspruch 2, **dadurch gekennzeichnet, daß** der Kolben (2) an seiner zylindrischen Mantelfläche eine radial umlaufende Ringnut (12) aufweist, in der ein Dichtring (13) axial beweglich angeordnet ist, der mit seinem äußeren radial umlaufenden Umfang mit Vorspannung an der Innenwand des Zylinders (1) in Anlage ist und an seinem inneren radial umlaufenden Umfang im Bereich des Nutgrundes (14) unterströmbar ist, wobei die der ersten Arbeitskammer (3) zugewandte Nutseitenwand (15) geschlossen ist und die der zweiten Arbeitskammer (4) zugewandte Nutseitenwand (16) im Bereich des Nutengrundes (14) eine zur zweiten Arbeitskammer (4) führende Strömungsverbindung (17) aufweist.

4. Kolben-Zylindereinheit nach einem der vorhergehenden Ansprüche, **dadurch gekennzeichnet, daß** das zweite Ventil von einer in eine Beaufschlagungsrichtung wirkenden und in die entgegengesetzte Beaufschlagungsrichtung nichtwirkenden Dichtung gebildet ist.

5. Kolben-Zylindereinheit nach einem der vorhergehenden Ansprüche, **dadurch gekennzeichnet, daß** das Magnetventil eine fest im Kolben (2) angeordnete, strombeaufschlagbare erste Spule (29) aufweist, in der ein Spulenkern (25) axial zur Bewegungsrichtung eines Ankers (32) angeordnet ist.

6. Kolben-Zylindereinheit nach Anspruch 5, **dadurch gekennzeichnet, daß** der Spulenkern aus einem fest im Kolben (2) angeordneten hülsenartigen äußeren Polkern (93) und einem von dem äußeren Polkern (93) umschlossenen zylinderartigen inneren Polkern (94) besteht, wobei der innere Polkern (94) an seiner äußeren Mantelfläche mit einem Außengewinde (95) versehen ist, mit dem der innere Polkern (94) in ein an der inneren Mantelfläche des äußeren Polkerns (93) ausgebildetes Innengewinde (96) eingeschraubt ist.

7. Kolben-Zylindereinheit nach einem der Ansprüche 5 und6, **dadurch gekennzeichnet, daß** der Anker (32) von einer zweiten strombeaufschlagbaren Spule (55) gebildet ist, wobei von der ersten Spule (29) und der zweiten Spule (55) einander anziehende Magnetfelder erzeugbar sind.

8. Kolben-Zylindereinheit nach einem der Ansprüche 5 bis 7, **dadurch gekennzeichnet, daß** an dem dem Anker (32) abgewandten Ende der ersten Spule (29) ein das Magnetfeld der ersten Spule (29) verstärkender Dauermagnet (53) angeordnet ist.

9. Kolben-Zylindereinheit nach einem der Ansprüche 5 bis 8, **dadurch gekennzeichnet, daß** an dem der ersten Spule (29) abgewandten Ende der zweiten Spule (55) ein das Magnetfeld der zweiten Spule (55) verstärkender zweiter Dauermagnet (56) angeordnet ist.

10. Kolben-Zylindereinheit nach einem der Ansprüche 5 bis 9, **dadurch gekennzeichnet, daß** der Durchlaß (19) in einem ankerseitigen, zylindrischen Bereich des Kolbens (2) radial nach außen mündet, wobei der zylindrische Bereich von dem ringförmig ausgebildeten Schließglied umschlossen und zwischen einer die Mündung des Durchlasses (19) abdeckenden Schließstellung und einer die Mündung freilassenden Öffnungsstellung axial bewegbar ist und wobei das Schließglied durch den federbelasteten Anker (32) in Schließrichtung beaufschlagt ist.

11. Kolben-Zylindereinheit nach einem der Ansprüche 5 bis 10, **dadurch gekennzeichnet, daß** der Anker (32) ringartig ausgebildet und auf dem zylindrisch ausgebildeten Spulenkern (25) axial verschiebbar angeordnet ist.

12. Kolben-Zylindereinheit nach einem der Ansprüche 5 bis 10, **dadurch gekennzeichnet, daß** der Anker (32) von einer am Spulenkern (25) abgestützten Druckfeder in Schließrichtung des Ventilschließglieds beaufschlagt ist und die Druckfeder an der ihr zugewandten ringartigen Stirnseite (97) des äußeren Polkerns (93) abgestützt ist.

13. Kolben-Zylindereinheit nach einem der vorhergehenden Ansprüche, **dadurch gekennzeichnet, daß** der Kolben (2) ein oder mehrere Führungsringe (28) aufweist, mit denen der Kolben (2) in dem Zylinder (1) axial verschiebbar geführt ist und die Führungsringe (28) aus einem elektrisch isolierenden oder einem ferromagnetischen Werkstoff bestehen oder einen von einem elektrisch isolierenden Mantel umschlossenen ferromagnetischen Kern aufweisen.
